# EUROPEAN PATENT SPECIFICATION

(11) **EP 4 362 152 B1**
(45) Date of publication and mention of the grant of the patent: **23.04.2025**
(21) Application number: 23200000.0
(22) Date of filing: 27.09.2023
(51) Int. Cl.: H01M 10/04, H01M 10/613, H01M 10/658, H01M 50/209, H01M 50/231, H01M 50/383

(54) **BATTERY PACK AND BATTERY SYSTEM**
BATTERIEPACK UND BATTERIESYSTEM
BLOC-BATTERIE ET SYSTÈME DE BATTERIE

(30) Priority: 29.10.2022 CN 202222875114 U
(43) Date of publication of application: 01.05.2024
(73) Proprietor: Huawei Digital Power Technologies Co., Ltd., Shenzhen, Guangdong 518043 (CN)
(72) Inventor: XU, Yunxiang, Shenzhen, Guangdong 518043 (CN); ZHU, Jing, Shenzhen, Guangdong 518043 (CN); ZHANG, Huan, Shenzhen, Guangdong 518043 (CN); WANG, Yongling, Shenzhen, Guangdong 518043 (CN); ZHANG, Junming, Shenzhen, Guangdong 518043 (CN)
(74) Representative: Maiwald GmbH

(56) References cited:
- WO-A1-2022/155056
- CN-U- 213 483 832
- US-A1- 2021 143 383

## Description

### TECHNICAL FIELD

This application relates to the field of fire prevention technologies for energy storage batteries, and in particular, to a battery pack and a battery system.

### BACKGROUND

A large quantity of combined battery packs (battery packs) are closely arranged during service of energy storage system products. When thermal runaway occurs in a single battery pack, a large quantity of heat is generated and spread to other battery packs, which may even cause a fire, resulting in a rapid rise in an ambient temperature.

Due to limited fire prevention and heat insulation performance of adjacent battery packs, the ambient temperature easily exceeds a thermal runaway temperature of the energy storage module such as a battery cell. As a result, a secondary fire occurs, and even a chain thermal runaway reaction is triggered, resulting in a wider range of thermal runaway propagation. This is also a main reason for frequent fire accidents in the energy storage system in recent years.

Specific heat insulation performance needs to be maintained between battery packs, and specific heat dissipation performance also needs to be ensured between battery packs. When the heat dissipation performance and the heat insulation performance are balanced, importance of heat insulation is usually lower than that of heat dissipation to ensure better heat dissipation. When a single battery pack in an energy storage system experiences thermal runaway and catches fire, the chain thermal runaway reaction occurs quickly, which may cause damage to the entire system within a short time.

US 2021/143383 A1 describes a battery with a fire protection device.

CN 213 483832 U describes a battery module capable of inhibiting thermal runaway expansion of a square shell electric core.

WO 2022/155056 A1 describes a thermally insulating multilayer sheet.

### SUMMARY

This application provides a battery pack and a battery system, which can meet requirements of both ventilation and thermal runaway insulation of the battery pack by disposing a heat insulation panel.

The present invention is defined by the subject-matter of the independent claims. Additional features of the invention are presented in the dependent claims.

According to a first aspect, this application provides a battery pack, including a heat insulation panel, a housing, and an energy storage module. The energy storage module is located in the housing, the heat insulation panel is located between the energy storage module and the housing, the heat insulation panel includes a heat insulation layer and an outer packaging layer, the heat insulation layer includes an elastic heat insulation layer and a fire-resistant layer, and the elastic heat insulation layer and the fire-resistant layer are stacked. The outer packaging layer wraps the outside of the heat insulation layer and is configured to compress a thickness of the elastic heat insulation layer, so that the heat insulation panel is compressed to a compressed state, and a ventilation channel is formed between the heat insulation panel in the compressed state and the energy storage module. The outer packaging layer is configured to release compression of the elastic heat insulation layer when the energy storage module reaches a thermal runaway temperature, so that the elastic heat insulation layer is elastically restored to a free state, and the heat insulation panel in the free state is filled between the housing and the energy storage module. When the battery pack works normally, the heat insulation panel is in the compressed state and is relatively thin, and does not block the ventilation channel of the battery pack, thereby meeting requirements of ventilation and heat dissipation of the battery pack. When thermal runaway occurs in the energy storage module such as a battery cell inside the battery pack, the heat insulation panel can automatically and quickly switch to the free state to completely fill the ventilation channel, thereby slowing down a speed at which heat passes through a side panel and spreads to the outside of the battery pack along the ventilation channel, and increasing a time for personnel to escape, rescue, and repair.

In a possible implementation, a hot melt temperature of the outer packaging layer is the thermal runaway temperature, the outer packaging layer is configured to be in a hot melt damage state to form a hollow part when the energy storage module reaches the hot melt temperature, and the hollow part is configured to release compression on the elastic heat insulation layer. When an ambient temperature exceeds the hot melt temperature, the outer packaging layer can be damaged automatically. A speed of releasing the compression on the elastic heat insulation layer is high, and the heat insulation panel can quickly switch to a free state when thermal runaway occurs.

In a possible implementation, the outer packaging layer is an aluminum-plastic film, and a vacuum rate in the aluminum-plastic film is maintained for a long time, thereby improving a service life of the heat insulation panel.

In a possible implementation, the elastic heat insulation layer is a foam heat insulation layer, and the foam heat insulation layer has good heat insulation performance. When a thickness reaches a specific value, an inner wall temperature of an adjacent module under thermal runaway can be effectively controlled below 150°C, and a heat insulation duration may reach at least 10 minutes. When the thermal runaway occurs in the battery pack, a response time is obtained for a subsequent active fire extinguishing action.

In a possible implementation, a free thickness of the elastic heat insulation layer is within a range of 3 millimeters to 20 millimeters, to fill different gaps between side panels and energy storage modules in different battery pack models, and enable the heat insulation panel to have relatively good heat insulation performance when used in different battery packs.

In a possible implementation, a compression thickness of the elastic heat insulation layer is within a range of 1 millimeter to 6 millimeters, so that a ventilation gap can be retained between the heat insulation panel in the compressed state and the energy storage module, to ensure that the battery pack has specific heat dissipation.

In a possible implementation, the fire-resistant layer is at least one of a mica tape layer, a ceramic fiberglass layer, and a silicone rubber layer. The fire-resistant layer can resist flame impact in a short time and has excellent performance such as insulation, pressure resistance, and non-flammability. When a high-temperature gas or flame is generated in the battery pack in which thermal runaway occurs, the fire-resistant layer can withstand the impact of the high-temperature gas and flame, to prevent the high-temperature gas and flame from extending to other battery packs.

In a possible implementation, a thickness of the fire-resistant layer is within a range of 0.1 millimeter to 0.3 millimeter, and a thickness of the heat insulation panel is reduced on a premise that fire resistance of the fire-resistant layer is ensured.

In a possible implementation, the housing includes a plurality of side panels, and the heat insulation panel is connected to an inner side of at least a part of the side panels. The heat insulation panel is disposed inside the side panel that requires ventilation, to meet ventilation and heat dissipation requirements when the battery pack works normally, and perform heat insulation in a timely manner when thermal runaway occurs, to prevent a thermal runaway temperature from spreading outwards.

In a possible implementation, there are at least two fire-resistant layers, the elastic heat insulation layer and the two fire-resistant layers are stacked, the elastic heat insulation layer is located between the two fire-resistant layers, and outer surfaces on both sides of the heat insulation panel are fire-resistant.

In a possible implementation, a silicone layer is disposed between the elastic heat insulation layer and the fire-resistant layer, and the elastic heat insulation layer and the fire-resistant layer are fastened by using the silicone layer.

In a possible implementation, the housing includes a panel. The panel includes a first panel and a second panel that are disposed at an interval. The first panel is located on a side of the second panel away from the energy storage module. A first heat dissipation hole is disposed on the first panel, and a second heat dissipation hole is disposed on the second panel. The first heat dissipation hole and the second heat dissipation hole communicate in a staggered manner. The heat insulation panel is disposed in an interlayer space between the first panel and the second panel, and a third heat dissipation hole is disposed on the heat insulation panel. The heat insulation panel is attached to the first panel. The first heat dissipation hole and the third heat dissipation hole communicate in a straight-through manner, and the second heat dissipation hole and the third heat dissipation hole communicate in a staggered manner. Alternatively, the heat insulation panel is attached to the second panel, the first heat dissipation hole and the third heat dissipation hole communicate in a staggered manner, and the second heat dissipation hole and the third heat dissipation hole communicate in a straight-through manner. When the heat insulation panel is in the compressed state, the first heat dissipation hole, the second heat dissipation hole, and the third heat dissipation hole are connected. When the heat insulation panel is in the free state, the heat insulation panel is configured to prevent the first heat dissipation hole from being connected to the second heat dissipation hole.

According to a second aspect, this application provides a battery system. The battery system includes the battery pack according to any one of the foregoing implementations, and further includes a mounting rack. The battery pack is connected to the mounting rack. A heat insulation panel is disposed in the battery pack of the battery system. When the battery pack works normally, the heat insulation panel is in a compressed state and is relatively thin, and does not block a ventilation channel of the battery pack, thereby meeting requirements of ventilation and heat dissipation of the battery pack. When thermal runaway occurs in a structure such as a battery cell inside the battery pack, the heat insulation panel can automatically and quickly switch to a free state to completely fill the ventilation channel, thereby slowing down a speed at which heat passes through a side panel and spreads to the outside of the battery pack along the ventilation channel, and increasing a time for personnel to escape, rescue, and repair.

### BRIEF DESCRIPTION OF DRAWINGS

FIG. 1 is a schematic exploded view of a battery pack according to an implementation of this application;
FIG. 2 is a schematic diagram of a structure of a battery pack according to an implementation of this application;
FIG. 3 is a schematic diagram of a structure of a heat insulation panel according to an implementation of this application;
FIG. 4 is a schematic diagram of a structure of a heat insulation layer according to an implementation of this application;
FIG. 5 is a schematic diagram of a connection between a heat insulation panel in a compressed state and a side panel and an energy storage module according to an implementation of this application;
FIG. 6 is a schematic diagram of a connection between a heat insulation panel in a free state and a side panel and an energy storage module according to an implementation of this application;
FIG. 7 is a schematic diagram of a structure of a double-layer side panel according to an implementation of this application;
FIG. 8 is a schematic diagram of a connection between a heat insulation panel in a compressed state and a double-layer side panel according to an implementation of this application;
FIG. 9 is a schematic diagram of a connection between a heat insulation panel in a free state and a double-layer side panel according to an implementation of this application; and
FIG. 10 is a schematic diagram of battery pack arrangement in a battery system according to an implementation of this application.

### DESCRIPTION OF EMBODIMENTS

The following describes embodiments of this application with reference to the accompanying drawings in embodiments of this application.

For ease of understanding, the following first explains and describes English abbreviations and related technical terms used in embodiments of this application.

Communicating in a staggered manner means that two ventilation holes or ventilation channels are disposed in a staggered manner, and air flowing through one of the ventilation holes needs to be shifted towards a side of a flow direction before entering the other ventilation hole.

Communicating in a straight-through manner means that central axes of the two ventilation holes or ventilation channels overlap with each other or are close to each other, and air flowing through one of the ventilation holes can enter the other ventilation hole along an original flow direction without changing a direction.

It should be clear that the described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a/an", "the" and "this" of singular forms used in embodiments and the appended claims of this application are also intended to include plural forms, unless otherwise specified in the context clearly.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, in a range used in this specification, for example, A to B, end values at both ends of A and B are included, and specifically refer to an intersection range between greater than or equal to A and less than or equal to B.

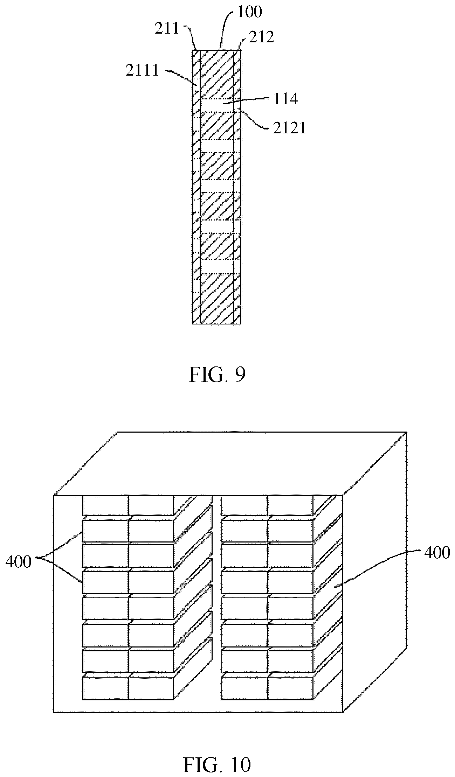

A common energy storage system at present is shown in FIG. 10. In this application, a lithium-ion battery is used as an example. A plurality of battery packs (battery packs) 400 are arranged at intervals in a cabinet. Each layer of an energy storage module includes a plurality of battery packs 400 arranged at intervals. There are a plurality of energy storage modules including the plurality of battery packs 400 arranged at intervals, and the plurality of energy storage modules are arranged at intervals in a height direction. The lithium-ion battery system (lithium-ion system) is an energy storage apparatus, and generally includes one or more lithium-ion battery packs and corresponding accessories. The foregoing accessories may include a battery management system, a high-voltage circuit, a lowvoltage circuit, a heat management device, a mechanical assembly, and the like.

The lithium-ion battery (lithium-ion cell) refers to an apparatus that implements mutual conversion between chemical energy and electric energy based on movement of lithium-ions between positive and negative electrodes. The apparatus includes an electrode, a diaphragm, an electrolyte, a housing, a terminal, and the like, and is designed to be rechargeable.

A lithium-ion battery module (lithium-ion cell module) is a combination of more than one battery cell in a serial connection manner, a parallel connection manner, or a serial-parallel connection manner, and is used as a power supply. The lithium-ion battery module has only one pair of positive and negative output terminals, and may also be referred to as a lithium-ion battery module, a battery module, and the like in this embodiment of this application.

The battery management system (battery management system, BMS) is a system that manages batteries. It usually includes a monitoring module and a computing control module. The BMS mainly includes a battery monitor unit (battery monitor unit, BMU) and a battery control unit (battery control unit, BCU).

A lithium-ion battery pack (lithium-ion pack) refers to a unit that has electric energy obtained from the outside and can output electric energy to the outside, and generally includes at least one lithium-ion battery module, one lithium-ion battery management module (excluding the BCU), one lithium-ion battery box, and one corresponding accessory. The lithium-ion battery pack includes auxiliary materials such as a battery string, a busbar, a soft connector, a protective plate, outer packaging, an output (including a connector), fish paper, and a plastic support.

A battery system usually includes the foregoing plurality of lithium-ion battery packs. The plurality of lithium-ion battery packs are combined in a serial connection manner, a parallel connection manner, or a serial-parallel connection manner, and are disposed in a cabinet at intervals.

With reference to FIG. 10, when thermal runaway occurs in a battery pack 400 of the battery system due to a factor such as a circuit fault, an internal temperature of the battery pack 400 rises sharply, and even a fire occurs, causing the temperature to rise rapidly to 1,200°C or above. The temperature of the battery pack 400 in which the thermal runaway occurs rises sharply, and a high-temperature gas or flame flows along gaps between battery packs 400. As a result, an ambient temperature of adjacent battery packs 400 in the battery system rises sharply, which affects use and a service life of the battery packs 400, and even causes a chain fire when the temperature increases to some extent. In addition, because the battery system is usually equipped with a heat dissipation mechanism when working, and there is air circulation in the gaps between the adjacent battery packs 400, a heat transfer speed is accelerated. As a result, the thermal runaway occurs in a battery pack 400, and a process of causing a fire to the entire battery system is relatively fast, and it is difficult to perform quick and effective rescue when the fire occurs.

To ensure heat dissipation of the battery pack 400, an absolute heat insulation structure cannot be formed between different battery packs 400, and a housing of a single battery pack 400 cannot be a complete heat insulation body. Therefore, it is difficult to implement both heat dissipation and thermal runaway insulation of the battery system.

This application provides a battery pack (battery pack), configured to store electric energy. A heat insulation panel is disposed inside the battery pack, so that requirements of both heat dissipation and thermal runaway insulation of the battery pack (battery pack) can be met.

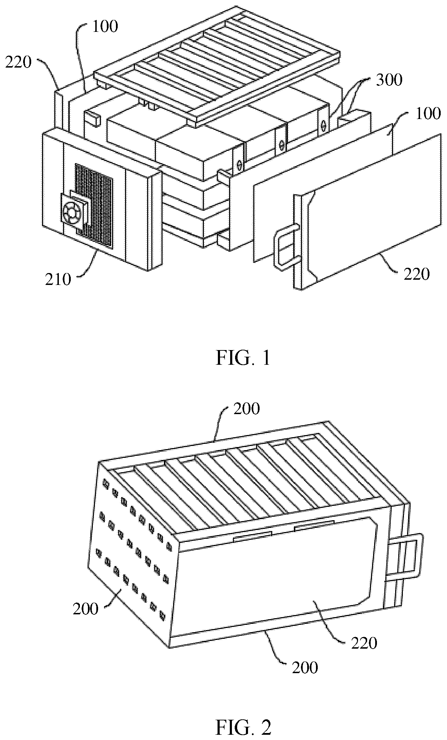

Specifically, with reference to FIG. 2 to FIG. 6, the battery pack includes a heat insulation panel 100, a housing 200, and an energy storage module 300. The housing 200 has a cavity, and the energy storage module 300 is located in the cavity.

The heat insulation panel 100 is fixed on at least a part of side panels 220 of the housing 200. The heat insulation panel 100 is located on an inner side of the side panel 220. A ventilation channel 230 is formed between the heat insulation panel 100 in a compressed state and the energy storage module 300. The heat insulation panel 100 in a free state seals a space between the housing 200 and the energy storage module 300.

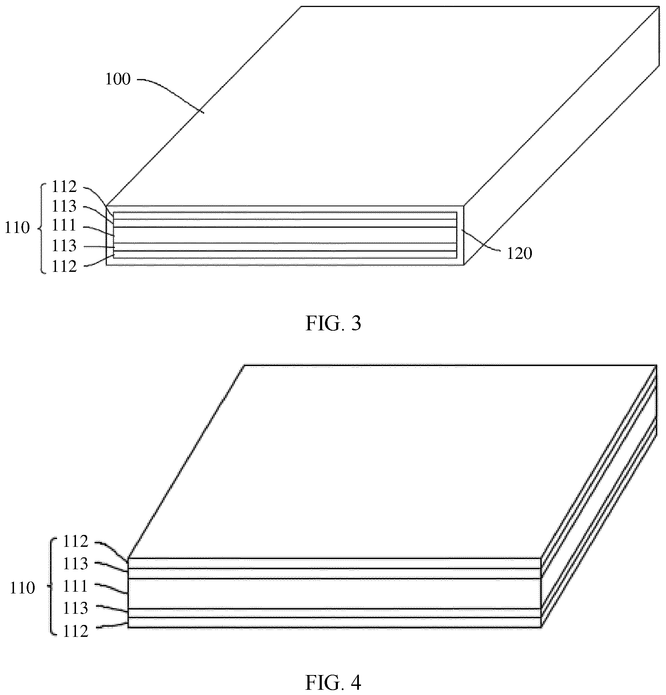

Specifically, with reference to FIG. 3, the heat insulation panel 100 includes a heat insulation layer 110 and an outer packaging layer 120. The outer packaging layer 120 wraps the outside of the heat insulation layer 110.

The heat insulation layer 110 includes an elastic heat insulation layer 111 and a fire-resistant layer 112. The elastic heat insulation layer 111 is made of a material having heat insulation performance. When a temperature of one side (for example, an upper side shown in FIG. 3) of the elastic heat insulation layer 111 rises, the elastic heat insulation layer 111 can effectively isolate the temperature from being transferred to the other side (for example, a lower side shown in FIG. 3). In addition, a preparation material of the elastic heat insulation layer 111 also has elasticity, and can be elastically deformed under external compressive force, to change an external dimension, or even change an external shape.

The fire-resistant layer 112 is made of a fire-resistant material. When a fire occurs on one side of the fire-resistant layers 112, the fire-resistant layer 112 can resist impact of a flame and prevent the flame from spreading to the other side of the fire-resistant layer 112. The fire-resistant layer 112 can withstand relatively high temperature impact, and usually can withstand impact of a flame and a high-temperature gas above 1,200°C. When the fire-resistant layer 112 is subjected to impact of a high-temperature gas and flame, no structural damage occurs, and integrity of the heat insulation panel 100 in an overall structure can be ensured.

The elastic heat insulation layer 111 and the fire-resistant layer 112 are stacked, and the elastic heat insulation layer 111 covers and is attached to one side of the fire-resistant layer 112. Length and width dimensions of the elastic heat insulation layer 111 are the same as length and width dimensions of the fire-resistant layer 112.

In this implementation, a square plate is used as an example, and the square plate has a length, a width, and a thickness. A length of the elastic heat insulation layer 111 may be the same as a length of the fire-resistant layer 112, a width of the elastic heat insulation layer 111 may be the same as a width of the fire-resistant layer 112, and a length of the elastic heat insulation layer 111 may be the same as or different from a thickness of the fire-resistant layer 112. It should be noted that the outer packaging layer 120 should wrap around the heat insulation layer 110, and the heat insulation layer 110 is packaged in the outer packaging layer 120. To facilitate displaying of a structure of the heat insulation layer 110, a stacked structure of the heat insulation layer 110 is shown in FIG. 3.

In this application, the elastic heat insulation layer 111 and the fire-resistant layer 112 may also be in other shapes, which may be determined based on a spatial shape of the heat insulation panel 100 in the battery pack. A peripheral edge of the heat insulation panel 100 contacts an inner wall of a housing of the battery pack, to seal a space on two sides of the heat insulation panel 100. When thermal runaway occurs in the battery pack and generates a hot gas or a flame with a relatively high temperature, the heat insulation panel 100 can effectively prevent the hot gas and the flame from being transferred to other battery packs in an external space along an outer edge of the heat insulation panel 100, and the heat insulation panel 100 can effectively isolate a high-temperature hot gas from being transferred to a space outside the battery pack.

Specifically, the elastic heat insulation layer 111 and the fire-resistant layer 112 are stacked. When an area (for example, an energy storage module) inside the battery pack generates a large amount of heat due to the thermal runaway, or even a fire occurs, a high-temperature gas and/or a high-temperature flame first contact/contacts with the fire-resistant layer 112, and the fire-resistant layer 112 can effectively prevent the high-temperature gas and the high-temperature flame from spreading to an external area of the battery pack. In addition, the heat insulation layer 110 formed by combining the fire-resistant layer 112 and the elastic heat insulation layer 111 can slow down a speed of transferring a temperature inside the battery pack to the other side of the heat insulation layer 110, prevent high-temperature heat generated by the battery pack from being transferred to other battery packs through the heat insulation layer 110, delay an occurrence time of chain thermal runaway and a chain fire, and strive for more time for maintenance and rescue.

Specifically, the heat insulation panel 100 in this application includes at least two states, namely, a free state and a compressed state.

In the compressed state, with reference to FIG. 3, an outer packaging layer 120 wraps an outer part of the heat insulation layer 110. In addition, because the elastic heat insulation layer 111 has elasticity, the outer packaging layer 120 can compress a thickness of the elastic heat insulation layer 111. For example, during assembly, a vacuum operation may be performed on an internal space of the outer packaging layer 120, and the heat insulation panel is compressed to the compressed state. In this case, the thickness of the elastic heat insulation layer 111 is a compression thickness.

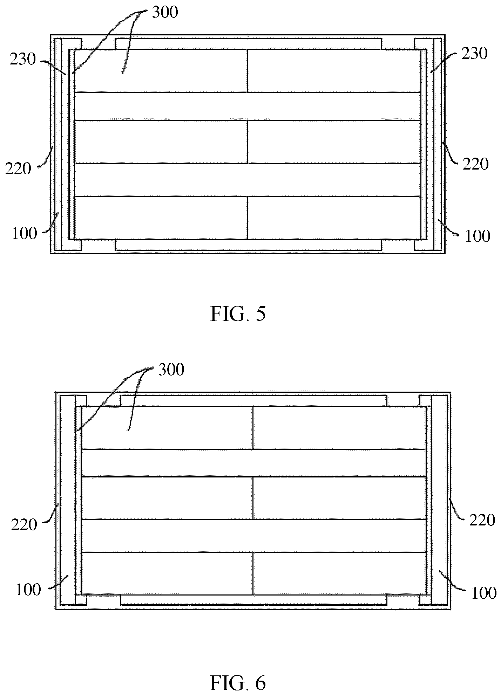

When the heat insulation panel 100 is disposed inside the battery pack to perform heat insulation, refer to FIG. 2, FIG. 1, FIG. 5, and FIG. 6. An example in which the heat insulation panel 100 is installed on left and right side panels 220 of the battery pack is used in this implementation. With reference to FIG. 5, the heat insulation panel 100 is fixed on an inner wall of the side panel 220 of the battery pack, and the ventilation channel 230 is retained between the heat insulation panel 100 and the energy storage module 300 inside the battery pack. The ventilation channel 230 may be used for ventilation, to dissipate heat for the energy storage module 300. In this implementation, an energy storage module 300 may be an energy storage module that has a device such as a battery cell with an energy storage function and that includes a control circuit.

When the battery pack works normally, the heat insulation panel 100 is attached to an inner side of the side panel 220, and the ventilation channel 230 formed between the heat insulation panel 100 and the energy storage module 300 is used for ventilation, to dissipate heat for the energy storage module 300.

When thermal runaway occurs in the energy storage module 300 inside the battery pack due to a fault such as a circuit fault, a relatively large amount of heat is generated inside the battery pack, and even a fire occurs. In this case, the outer packaging layer 120 is damaged because the temperature inside the battery pack increases. For example, with reference to FIG. 4, when the energy storage module 300 reaches a thermal runaway temperature, the outer packaging layer 120 is in a hot melt damage state (a structural damage due to an increase of an ambient temperature to a hot melt temperature, for example, an aluminum-plastic film has a through-hole in an area with a rising temperature) due to an increase of an internal temperature of the battery pack to the thermal runaway temperature, and the internal temperature exceeds the hot melt temperature of the outer packaging layer 120. The outer packaging layer 120 has a hollow part due to a sealing structure. The hollow part may be a hollow hole on the outer packaging layer 120, so that inner and outer atmospheric pressure of the outer packaging layer 120 is gradually balanced, the outer packaging layer 120 releases compression performed on the heat insulation layer 110, and the elastic heat insulation layer 111 loses binding of the outer packaging layer 120 and automatically restores to the free state. FIG. 3 is a schematic diagram of a heat insulation panel 100 in a compressed state. FIG. 4 is a schematic diagram of a heat insulation panel 100 in a free state. A free thickness of the elastic heat insulation layer 111 in the free state is greater than a compression thickness of the elastic heat insulation layer 111 in the compressed state.

With reference to FIG. 6, after the heat insulation panel 100 changes from the compressed state to the free state, a thickness of the elastic heat insulation layer 111 increases, and an overall thickness of the heat insulation panel 100 increases to a size that can fill a gap space between the side panel 220 and the energy storage module 300, to form a filling heat insulation structure between the side panel 220 and the energy storage module 300. Heat generated by the energy storage module 300 does not flow to the outside along a ventilation channel of the battery pack, thereby reducing a speed of transferring the heat inside the battery pack.

For the heat insulation panel in this implementation, when the battery pack works normally, the heat insulation panel is in the compressed state and is relatively thin, and does not block a ventilation channel of the battery pack, thereby meeting requirements of ventilation and heat dissipation of the battery pack. When thermal runaway occurs in a structure such as a battery cell inside the battery pack, the heat insulation panel can automatically and quickly switch to a free state to completely fill the ventilation channel, thereby slowing down a speed at which heat passes through a side panel and spreads to the outside of the battery pack along the ventilation channel, and increasing a time for personnel to escape, rescue, and repair.

In a possible implementation, with reference to FIG. 3 and FIG. 4, there are at least two fire-resistant layers 112. In this implementation, two fire-resistant layers 112 are used as an example. There is one elastic heat insulation layer 111, and the two fire-resistant layers 112 are respectively located on both sides of the elastic heat insulation layer 111, to form a heat insulation layer 110 with a three-layer stacked structure.

In the heat insulation layer 110 with the three-layer stacked structure, the two fire-resistant layers 112 are located on both sides of the elastic heat insulation layer 111, and the elastic heat insulation layer 111 is sandwiched between the two fire-resistant layers 112. Both sides of the heat insulation layer 110 are heat-resistant and fire-resistant. When a high-temperature gas and flame occurs on either side, the heat insulation layer 110 is not damaged due to a sudden temperature rise, and integrity of the heat insulation panel 100 can be ensured. In addition, the elastic heat insulation layer 111 is sandwiched between the two fire-resistant layers 112, to effectively isolate heat transfer between the two fire-resistant layers 112.

Specifically, there may be a plurality of fire-resistant layers 112 and elastic heat insulation layer 111 in the heat insulation layer 110, and the fire-resistant layers 112 and the elastic heat insulation layers 111 are arranged at intervals. Specifically, two layers on an outermost side of the heat insulation layer 110 may be both fire-resistant layers 112, so that both sides of the heat insulation layer 110 can withstand impact of a high-temperature gas and a high-temperature flame when thermal runaway occurs. Alternatively, only one side of the heat insulation layer 110 is the fire-resistant layer 112, and when the heat insulation panel 100 is placed in the battery pack, a fire-resistant layer 112 on an outermost side is close to a side of the battery pack that is prone to experience the thermal runaway. In this implementation, an example in which both sides of the heat insulation layer 110 are the fire-resistant layers 112 is used, to implement better elastic compression. In addition, when a fire-resistant layer 112 on an outer side is damaged due to deformation and collision, the fire-resistant layer 112 in the heat insulation layer 110 can also play a role of fire resistance and heat insulation.

In a possible implementation, when the heat insulation layer 110 is a multi-layer stacked structure, a fire-resistant layer 112 on an outermost side of the heat insulation layer 110 may be made of a material having a specific hardness. In this way, when the outer packaging layer 120 compresses the heat insulation layer 110, the fire-resistant layer 112 of the hard material relatively squeezes the elastic heat insulation layer 111 under compression of the outer packaging layer 120, so that an entire heat insulation panel 100 presents a relatively flat plate shape.

In a possible implementation, with reference to FIG. 3 and FIG. 4, a silicone layer 113 is further disposed between the elastic heat insulation layer 111 and the fire-resistant layers 112, and the elastic heat insulation layer 111 and the fire-resistant layers 112 are fastened by using the silicone layer 113.

Specifically, during preparation of the heat insulation layer 110, the elastic heat insulation layer 111 is first coated with the silicone layer 113, and/or the fire-resistant layers 112 are coated with the silicone layer 113. Then, the elastic heat insulation layer 111 is bonded with the fire-resistant layers 112, and the elastic heat insulation layer 111 and the fire-resistant layers 112 are fastened by using an adhesive function of the silicone layer 113.

A silicone has adhesiveness, and can fixedly connect the elastic heat insulation layer 111 and the fire-resistant layers 112. In addition, the silicone has good tensile strength and elongation. When the heat insulation panel is compressed from the free state to the compressed state, the silicone layer 113 does not deform due to a damage caused by external pressure.

In addition, in this implementation, a high-temperature-resistant silicone may be used to withstand a temperature above 200°C. When thermal runaway occurs, a structure of the silicone layer does not change, so that a structure of the heat insulation panel 100 remains integral in the free state.

In a possible implementation, the elastic heat insulation layer 111 is made of a material having elasticity and heat insulation performance. In this implementation, the elastic heat insulation layer 111 is made of a foam material. For example, the foam material may be a polyurethane foam or a polyimide foam.

A thermal conductivity of the foam material is less than 0.04 w/(m.k) at 25°C, and has good heat insulation performance. When a thickness reaches a specific value, the foam material can effectively control an inner wall temperature of an adjacent module with thermal runaway under 150°C, and a heat insulation duration can reach at least 10 minutes. When the thermal runaway occurs in the battery pack, a response time is obtained for a subsequent active fire extinguishing action. In addition, the foam material further has good compressibility, and a compression ratio > 50%. Under pressure of the outer packaging layer 120, a volume can be compressed to 50%, and can quickly rebound after external compression force of the outer packaging layer 120 is removed.

Specifically, in a state in which the outer packaging layer 120 compresses the heat insulation layer 110, the heat insulation panel 100 is in the compressed state. In this case, a thickness of the elastic heat insulation layer 111 is within a range of 1 millimeter to 6 millimeters, which may be specifically determined based on a width of a gap between the energy storage module 300 and the side panel 220. The gap between the heat insulation panel 100 and the side panel 220 can ensure air circulation, to ensure heat dissipation of the battery pack.

When the heat insulation layer 110 loses binding force of the outer packaging layers 120, and the outer packaging layers 120 do not compress the heat insulation layer 110, the heat insulation panel 100 is in the free state. In this case, the thickness of the elastic heat insulation layer 111 is within a range of 3 millimeters to 20 millimeters, and a specific thickness is determined based on the width of the gap between the energy storage module 300 and the side panel 220. A solution is that the heat insulation panel 100 in the free state fills the gap between the energy storage module 300 and the side panel 220, the heat insulation panel 100 in the free state is sandwiched by the energy storage module 300 and the side panel 220, and the elastic heat insulation layer 111 is sandwiched by the energy storage module 300 and the side panel 220 to specific elastic compression. In the free state, the heat insulation panel 100 can effectively prevent the high-temperature gas and flame generated by the battery pack from flowing into the gap, and increase a duration of transferring the high-temperature gas and flame to other surrounding battery packs, thereby providing assistance for rescue.

In a possible implementation, fire-resistant layers 112 are made of a fire-resistant material. In this implementation, the fire-resistant layers 112 may be made of a mica tape fire-resistant material.

A thickness of the mica tape may optionally be within a range of 0.1 millimeter to 0.3 millimeter, for example, may be 0.2 millimeter. In this implementation, the thickness of the mica tape is limited to a range from 0.1 millimeter to 0.3 millimeter, so that the mica tape has relatively good bending resistance. When the mica tape is bent due to external force such as collision during production and assembly, the mica tape does not crack due to bending, and integrity of the fire-resistant layers 112 is ensured. A mica tape material can resist impact of a flame above 1,200°C within a short time, and has excellent performance such as insulation, pressure resistance, and non-flammability. When a high-temperature gas or flame is generated in the battery pack in which thermal runaway occurs, a mica tape layer in the heat insulation panel 100 can withstand impact of the high-temperature gas and flame, to prevent the high-temperature gas and flame from extending to other battery packs.

The mica tape includes a synthetic mica tape, a muscovite mica tape, and a phlogopite mica tape. The synthetic mica tape has optimal high-temperature resistance. The fire-resistant layer 112 in this implementation may be a synthetic mica tape layer. The synthetic mica is an artificial mica synthesized by replacing hydroxy with fluorine under normal pressure, and has advantages of large size and crystal form integrity. The synthetic mica tape is made by using mica paper made from the synthetic mica as a main material, and then using adhesive to paste a glass cloth on one or both sides by a mica tape machine. If the glass cloth is pasted on one side of the mica paper, the tape is called a "single-sided tape". If the glass cloth is pasted on both sides of the mica paper, the tape is called the "doublesided tape". In a manufacturing process, several structural layers are bonded together, dried by a furnace, rolled up, and then split into tapes of different specifications. The synthetic mica tape has characteristics of a natural mica belt, such as a small expansion coefficient, a large dielectric strength, a high electrical resistivity, and a uniform dielectric constant. In addition, the synthetic mica tape has high heat resistance, and can reach a fire resistance degree above 1,000°C. Moreover, the synthetic mica tape is made with a relatively thin thickness, which meets a thickness and heat resistance requirements of the fire-resistant layer in this implementation.

Alternatively, the fire-resistant layer 112 may be at least one of a ceramic fiberglass layer or a silicone rubber layer. Alternatively, the fire-resistant layer 112 may be formed by stacking two of fire-resistant structure layers: a mica tape layer, a ceramic fiberglass layer, and a silicone rubber layer.

In a possible implementation, the outer packaging layer 120 is made of an aluminum-plastic material. Specifically, the outer packaging layer 120 is an aluminum-plastic film.

When the heat insulation panel 100 is prepared, the fire-resistant layer 112 and the elastic heat insulation layer 111 in a stacked structure are placed in the aluminum-plastic film, and the aluminum-plastic film wraps the heat insulation layer 110 that includes the fire-resistant layers 112 and the elastic heat insulation layer 111. A vacuum operation is performed on the inside of the aluminum-plastic film and air may be removed from the inside. Alternatively, volume compression is performed on the heat insulation panel 100 by using a press-fitting device to exhaust the air from an inside cavity of the aluminum-plastic film. The volume of the elastic heat insulation layer 111 gradually decreases under external pressure. When a compression thickness is reached, the vacuum operation is stopped, and the aluminum-plastic film is sealed, to form the heat insulation panel 100 in the compressed state.

The aluminum-plastic film is configured to compress the fire-resistant layer 112 and the elastic heat insulation layer 111, and is further configured to package an internal space, to prevent the elastic heat insulation layer 111 from automatically restoring to the free state. When thermal runaway occurs in the battery pack and a high-temperature gas and/or flame are/is generated, the aluminum-plastic film is heated and melts quickly within a temperature range of 80°C to 120°C. In addition, the aluminum-plastic film has fire-retardant insulation performance and does not cause internal thermal runaway risks.

In this implementation, the aluminum-plastic film is used to perform vacuum compression on the heat insulation layer 110, and a vacuum rate in the aluminum-plastic film is maintained for a long time, thereby improving a service life of the heat insulation panel.

Specifically, the outer packaging layer 120 in this implementation is made of an aluminum-plastic film material. When the thermal runaway occurs in the battery pack and a high-temperature gas is generated, the aluminum-plastic film may be melted at about 100°C, thereby eliminating a binding effect of the aluminum-plastic film on the heat insulation layer 110, and enabling the heat insulation panel 100 to automatically change from the compressed state to the free state.

Specifically, the outer packaging layer 120 may also be made of other materials of similar performance, or the heat insulation panel 100 and a temperature sensor are linked with a needle-puncture mechanism. The temperature sensor detects that the battery pack temperature rises, and controls the needle-puncture mechanism to puncture the outer packaging layer 120 when the thermal runaway occurs in the battery pack, to eliminate binding force of the outer packaging layer 120 on the heat insulation layer 110. The outer packaging layer 120 in this application may be automatically damaged at a high temperature when the thermal runaway occurs in the battery pack, or may be damaged by other apparatuses.

In a possible implementation, a heat insulation material using two layers of mica tapes with a heat insulation foam sandwiched in the middle is used as an example. Different thicknesses of the heat insulation foam material are used, and the heat insulation panel 100 made of the foregoing material is placed between the side panel of the battery pack and the energy storage module.

The heat insulation foam is disposed between two layers of mica tape layers, and is packaged by using the aluminum-plastic film. The heat insulation foam and the mica tapes are bonded by using high-temperature-resistant silicone. The prepared heat insulation panel 100 is installed in the energy storage battery pack, and may be specifically located between the side panel of the battery pack and the energy storage module. A heating plate is used to heat two battery cells in the energy storage module until thermal runaway occurs. If no open flame occurs after 10 minutes, the battery cells are manually ignited to intervene. In addition, thermocouples are disposed on inner walls of the adjacent packs to record fire prevention and heat insulation performance of the heat insulation panel 100 and a time when a cold surface temperature ≤ 150°C. The preceding tests are performed on two types of heat insulation foams with different thicknesses. Test results are shown in the following table.

**Table 1 Heat insulation duration of heat insulation panels made of heat insulation foam with different thicknesses**

| Thickness of a heat insulation foam (Thickness in a free state) | Thickness of a mica tape | Duration when a cold surface temperature of adjacent packs ≤ 150°C |
|---|---|---|
| 3 millimeters | 0.15 millimeter | 355 seconds |
| 5 millimeters | 0.15 millimeter | 634 seconds |

It can be learned from Table 1 that, with an increase of the thickness of the heat insulation foam material, the heat insulation duration of the heat insulation panel 100 is longer, and the heat insulation effect becomes better. When the thickness of the heat insulation foam reaches about 5 millimeters, when thermal runaway occurs in a battery pack and a fire occurs, adjacent battery packs are still below 150°C within 10 minutes, and no chain thermal runaway occurs in a short time, which increases a fire rescue time for the energy storage system.

In a possible implementation, with reference to FIG. 1, FIG. 7, FIG. 8, and FIG. 10, the housing 200 includes a panel 210, and a front panel in this implementation is used as an example.

The panel 210 includes a first panel 211 and a second panel 212 that are disposed at an interval. The first panel 211 is located on a side of the second panel 212 away from the energy storage module 300. A first heat dissipation hole 2111 is disposed on the first panel 211, a second heat dissipation hole 2121 is disposed on the second panel 212, and the first heat dissipation hole 2111 and the second heat dissipation hole 2121 communicate in a staggered manner.

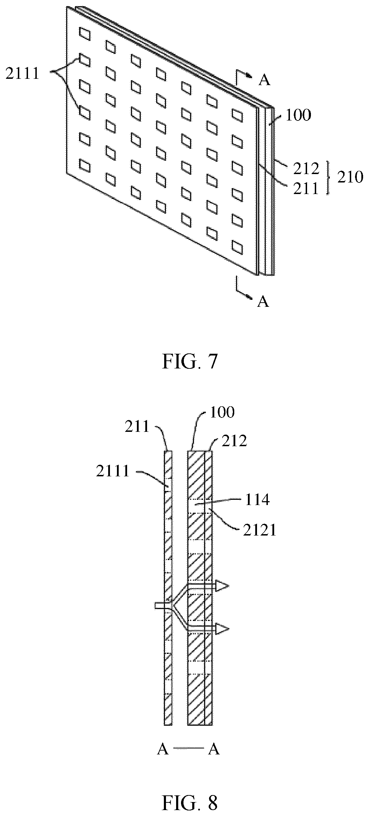

With reference to FIG. 8, when the battery pack works normally, the heat insulation panel 100 is located between the first panel 211 and the second panel 212, and the heat insulation panel 100 may be attached to a side surface of the second panel 212. There is a gap between the heat insulation panel 100 and the first panel 211 to ensure ventilation. A third heat dissipation hole 114 is disposed on the heat insulation panel 100, and the third heat dissipation hole 114 and the second heat dissipation hole 2121 communicate with each other.

With reference to FIG. 8, that the first heat dissipation hole 2111 and the second heat dissipation hole 2121 communicate in a staggered manner means that air flowing through the first heat dissipation hole 2111 needs to be shifted in a specific direction before entering the second heat dissipation hole 2121. With reference to FIG. 8, an arrow in FIG. 8 indicates that a wind passing through one of the first heat dissipation holes 2111 may enter the second heat dissipation hole 2121 after being shifted in a direction. That the third heat dissipation hole 114 and the second heat dissipation hole 2121 communicate in a straight-through manner means that air flowing through the third heat dissipation hole 114 may enter the second heat dissipation hole 2121 in a straight-line manner without being shifted in a direction.

When the battery pack works normally, the heat insulation panel 100 is in the compressed state. With reference to FIG. 8, the first heat dissipation hole 2111, the second heat dissipation hole 2121, and the third heat dissipation hole 114 communicate with each other, and air outside the panel 210 can enter an inner side of the panel 210 through the first heat dissipation hole 2111, the second heat dissipation hole 2121, and the third heat dissipation hole 114 in sequence, to dissipate heat for the energy storage module 300.

When thermal runaway occurs in the battery pack, with reference to FIG. 9, the heat insulation panel 100 restores to the free state, and is filled between the first panel 211 and the second panel 212. The heat insulation panel 100 blocks a connection between the first heat dissipation hole 2111 and the second heat dissipation hole 2121, to prevent a high-temperature gas and flame at an inner side of the panel 210 from passing through the first heat dissipation hole 2111 and the second heat dissipation hole 2121 and spreading to an outer side of the panel 210.

In a possible implementation, the first heat dissipation hole 2111 and the third heat dissipation hole 114 communicate in a straight-through manner, the third heat dissipation hole 114 and a second heat dissipation hole 2121 communicate in a staggered manner, and a heat insulation panel 100 is attached to a first panel 211. When thermal runaway occurs in the battery pack, the heat insulation panel 100 restores to the free state, and blocks the second heat dissipation hole 2121, to implement heat insulation against a high-temperature gas and flame.

This application further provides a battery system. With reference to FIG. 10, the battery system includes the battery pack 400 according to any one of the foregoing implementations. It should be noted that the battery system in this application may be a lithium-ion battery system according to any one of the foregoing implementations, or may be a lead-zinc battery system, a graphene battery system, or the like.

Specifically, the battery system further includes a mounting rack. There are a plurality of battery packs 400, and the plurality of battery packs 400 are connected to the mounting rack, for example, are fastened by using screws. The mounting rack may be a multi-layer structure similar to a multi-layer drawer-like structure, and the plurality of battery packs 400 are mounted on the mounting rack in a matrix manner.

## Claims

1. A battery pack, comprising a heat insulation panel (100), a housing (200), and an energy storage module (300), wherein the energy storage module (300) is located in the housing (200), the heat insulation panel (100) is located between the energy storage module (300) and the housing (200), the heat insulation panel (100) comprises a heat insulation layer (110) and an outer packaging layer (120), the heat insulation layer (110) comprises an elastic heat insulation layer (111) and a fire-resistant layer (112), and the elastic heat insulation layer (111) and the fire-resistant layer (112) are stacked; **characterized in that**
the outer packaging layer (120) wraps the outside of the heat insulation layer (110) and is configured to compress a thickness of the elastic heat insulation layer (111), so that the heat insulation panel (100) is compressed to a compressed state, and a ventilation channel (230) is formed between the heat insulation panel (100) in the compressed state and the energy storage module (300); and
the outer packaging layer (120) is configured to release compression of the elastic heat insulation layer (111) when the energy storage module (300) reaches a thermal runaway temperature, so that the elastic heat insulation layer (111) is elastically restored to a free state, and the heat insulation panel (100) in the free state is filled between the housing (200) and the energy storage module (300).

2. The battery pack according to claim 1, wherein a hot melt temperature of the outer packaging layer (120) is the thermal runaway temperature, the outer packaging layer (120) is configured to be in a hot melt damage state to form a hollow part when the energy storage module (300) reaches the hot melt temperature, and the hollow part is configured to release compression on the elastic heat insulation layer (111).

3. The battery pack according to claim 1 or 2, wherein the outer packaging layer (120) is an aluminum-plastic film.

4. The battery pack according to claim 1, wherein the elastic heat insulation layer (111) is a foam heat insulation layer.

5. The battery pack according to any one of claims 1, 2, and 4, wherein a free thickness of the elastic heat insulation layer (111) in the free state is within a range of 3 millimeters to 20 millimeters.

6. The battery pack according to any one of claims 1, 2, and 4, wherein a compression thickness of the elastic heat insulation layer (111) is within a range of 1 millimeter to 6 millimeters.

7. The battery pack according to claim 1, wherein the fire-resistant layer (112) is at least one of a mica tape layer, a ceramic fiberglass layer, and a silicone rubber layer.

8. The battery pack according to any one of claims 1, 2, 4, and 7, wherein a thickness of the fire-resistant layer (112) is within a range of 0.1 millimeter to 0.3 millimeter.

9. The battery pack according to any one of claims 1, 2, 4, and 7, wherein the housing (200) comprises a plurality of side panels, and the heat insulation panel (100) is connected to an inner side of at least a part of the side panels.

10. The battery pack according to any one of claims 1, 2, 4, and 7, wherein there are at least two fire-resistant layers (112), the elastic heat insulation layer (111) and the two fire-resistant layers (112) are stacked, and the elastic heat insulation layer (111) is located between the two fire-resistant layers (112).

11. The battery pack according to any one of claims 1, 2, 4, and 7, wherein a silicone layer is disposed between the elastic heat insulation layer (111) and the fire-resistant layer (112), and the elastic heat insulation layer (111) and the fire-resistant layer (112) are fastened by using the silicone layer.

12. The battery pack according to any one of claims 1, 2, 4, and 7, wherein the housing (200) comprises a panel, the panel comprises a first panel and a second panel that are disposed at an interval, and the first panel is located on a side of the second panel away from the energy storage module (300), a first heat dissipation hole is disposed on the first panel, a second heat dissipation hole is disposed on the second panel, and the first heat dissipation hole and the second heat dissipation hole communicate in a staggered manner;
the heat insulation panel (100) is disposed in an interlayer space between the first panel and the second panel, and a third heat dissipation hole is disposed on the heat insulation panel; (100)
the heat insulation panel (100) is attached to the first panel, the first heat dissipation hole and the third heat dissipation hole communicate in a straight-through manner, and the second heat dissipation hole and the third heat dissipation hole communicate in a staggered manner; or the heat insulation panel (100) is attached to the second panel, the first heat dissipation hole and the third heat dissipation hole communicate in a staggered manner, and the second heat dissipation hole and the third heat dissipation hole communicate in a straight-through manner; and
when the heat insulation panel (100) is in the compressed state, the first heat dissipation hole, the second heat dissipation hole, and the third heat dissipation hole are connected; and when the heat insulation panel (100) is in the free state, the heat insulation panel (100) is configured to prevent the first heat dissipation hole from being connected to the second heat dissipation hole.

13. A battery system, comprising the battery pack according to any one of claims 1 to 12, and further comprising a mounting rack, wherein the battery pack is connected to the mounting rack.

## Patentansprüche

1. Batteriepack, umfassend eine Wärmeisolationsplatte (100), ein Gehäuse (200) und ein Energiespeichermodul (300), wobei sich das Energiespeichermodul (300) in dem Gehäuse (200) befindet, sich die Wärmeisolationsplatte (100) zwischen dem Energiespeichermodul (300) und dem Gehäuse (200) befindet, die Wärmeisolationsplatte (100) eine Wärmeisolationsschicht (110) und eine äußere Verpackungsschicht (120) umfasst, die Wärmeisolationsschicht (110) eine elastische Wärmeisolationsschicht (111) und eine feuerfeste Schicht (112) umfasst und die elastische Wärmeisolationsschicht (111) und die feuerfeste Schicht (112) gestapelt sind; **dadurch gekennzeichnet, dass**
die äußere Verpackungsschicht (120) die Außenseite der Wärmeisolationsschicht (110) umhüllt und dazu konfiguriert ist, eine Dicke der elastischen Wärmeisolationsschicht (111) zu komprimieren, sodass die Wärmeisolationsplatte (100) in einen komprimierten Zustand komprimiert wird und ein Belüftungskanal (230) zwischen der Wärmeisolationsplatte (100) in dem komprimierten Zustand und dem Energiespeichermodul (300) gebildet wird; und
die äußere Verpackungsschicht (120) dazu konfiguriert ist, die Komprimierung der elastischen Wärmeisolationsschicht (111) freizugeben, wenn das Energiespeichermodul (300) eine thermische Durchlauftemperatur erreicht, sodass die elastische Wärmeisolationsschicht (111) elastisch in einen freien Zustand zurückgeführt wird und die Wärmeisolationsplatte (100) in dem freien Zustand zwischen das Gehäuse (200) und das Energiespeichermodul (300) ausgefüllt ist.

2. Batteriepack nach Anspruch 1, wobei eine Heißschmelztemperatur der äußeren Verpackungsschicht (120) die thermische Durchlauftemperatur ist, die äußere Verpackungsschicht (120) dazu konfiguriert ist, sich in einem Heißschmelzbeschädigungszustand zu befinden, um einen hohlen Teil zu bilden, wenn das Energiespeichermodul (300) die Heißschmelztemperatur erreicht, und der hohle Teil dazu konfiguriert ist, die Komprimierung auf der elastischen Wärmeisolationsschicht (111) freizugeben.

3. Batteriepack nach Anspruch 1 oder 2, wobei die äußere Verpackungsschicht (120) eine Aluminium-Kunststoff-Folie ist.

4. Batteriepack nach Anspruch 1, wobei die elastische Wärmeisolationsschicht (111) eine Schaum-Wärmeisolationsschicht ist.

5. Batteriepack nach einem der Ansprüche 1, 2 und 4, wobei eine freie Dicke der elastischen Wärmeisolationsschicht (111) in dem freien Zustand innerhalb eines Bereichs von 3 Millimeter bis 20 Millimeter liegt.

6. Batteriepack nach einem der Ansprüche 1, 2 und 4, wobei eine Komprimierungsdicke der elastischen Wärmeisolationsschicht (111) innerhalb eines Bereichs von 1 Millimeter bis 6 Millimeter liegt.

7. Batteriepack nach Anspruch 1, wobei die feuerfeste Schicht (112) mindestens eine von einer Glimmerbandschicht, einer keramischen Glasfaserschicht und einer Silikongummischicht ist.

8. Batteriepack nach einem der Ansprüche 1, 2, 4 und 7, wobei eine Dicke der feuerfesten Schicht (112) innerhalb eines Bereichs von 0,1 Millimeter bis 0,3 Millimeter liegt.

9. Batteriepack nach einem der Ansprüche 1, 2, 4 und 7, wobei das Gehäuse (200) eine Vielzahl von Seitenplatten umfasst und die Wärmeisolationsplatte (100) mit einer Innenseite von mindestens einem Teil der Seitenplatten verbunden ist.

10. Batteriepack nach einem der Ansprüche 1, 2, 4 und 7, wobei mindestens zwei feuerfeste Schichten (112) vorhanden sind, die elastische Wärmeisolationsschicht (111) und die zwei feuerfesten Schichten (112) gestapelt sind und sich die elastische Wärmeisolationsschicht (111) zwischen den zwei feuerfesten Schichten (112) befindet.

11. Batteriepack nach einem der Ansprüche 1, 2, 4 und 7, wobei eine Silikonschicht zwischen der elastischen Wärmeisolationsschicht (111) und der feuerfesten Schicht (112) angeordnet ist und die elastische Wärmeisolationsschicht (111) und die feuerfeste Schicht (112) unter Verwendung der Silikonschicht befestigt sind.

12. Batteriepack nach einem der Ansprüche 1, 2, 4 und 7, wobei das Gehäuse (200) eine Platte umfasst, die Platte eine erste Platte und eine zweite Platte umfasst, die in einem Abstand angeordnet sind, und sich die erste Platte auf einer Seite der zweiten Platte befindet, die von dem Energiespeichermodul (300) entfernt ist, ein erstes Wärmeableitungsloch an der ersten Platte angeordnet ist, ein zweites Wärmeableitungsloch an der zweiten Platte angeordnet ist und das erste Wärmeableitungsloch und das zweite Wärmeableitungsloch in versetzter Weise in Verbindung stehen;
die Wärmeisolationsplatte (100) in einem Zwischenschichtraum zwischen der ersten Platte und der zweiten Platte angeordnet ist und ein drittes Wärmeableitungsloch an der Wärmeisolationsplatte (100) angeordnet ist;
die Wärmeisolationsplatte (100) an der ersten Platte angebracht ist, das erste Wärmeableitungsloch und das dritte Wärmeableitungsloch in gerader Durchlassweise in Verbindung stehen und das zweite Wärmeableitungsloch und das dritte Wärmeableitungsloch in versetzter Weise in Verbindung stehen; oder die Wärmeisolationsplatte (100) an der zweiten Platte angebracht ist, das erste Wärmeableitungsloch und das dritte Wärmeableitungsloch in versetzter Weise in Verbindung stehen und das zweite Wärmeableitungsloch und das dritte Wärmeableitungsloch in gerader Durchlassweise in Verbindung stehen; und
wenn sich die Wärmeisolationsplatte (100) in dem komprimierten Zustand befindet, das erste Wärmeableitungsloch, das zweite Wärmeableitungsloch und das dritte Wärmeableitungsloch verbunden sind; und wenn sich die Wärmeisolationsplatte (100) in dem freien Zustand befindet, die Wärmeisolationsplatte (100) dazu konfiguriert ist, zu verhindern, dass das erste Wärmeableitungsloch mit dem zweiten Wärmeableitungsloch verbunden ist.

13. Batteriesystem, umfassend den Batteriepack nach einem der Ansprüche 1 bis 12 und ferner umfassend ein Montagegestell, wobei der Batteriepack mit dem Montagegestell verbunden ist.

## Revendications

1. Bloc-batterie comprenant un panneau d'isolation thermique (100), un boîtier (200) et un module de stockage d'énergie (300), dans lequel le module de stockage d'énergie (300) est situé dans le boîtier (200), le panneau d'isolation thermique (100) est situé entre le module de stockage d'énergie (300) et le boîtier (200), le panneau d'isolation thermique (100) comprend une couche d'isolation thermique (110) et une couche d'emballage externe (120), la couche d'isolation thermique (110) comprend une couche d'isolation thermique élastique (111) et une couche ignifuge (112), et la couche d'isolation thermique élastique (111) et la couche ignifuge (112) sont empilées ; **caractérisé en ce que**
la couche d'emballage externe (120) enveloppe l'extérieur de la couche d'isolation thermique (110) et est configurée pour comprimer une épaisseur de la couche d'isolation thermique élastique (111), de sorte que le panneau d'isolation thermique (100) est comprimé jusqu'à un état comprimé, et un canal de ventilation (230) est formé entre le panneau d'isolation thermique (100) à l'état comprimé et le module de stockage d'énergie (300) ; et
la couche d'emballage externe (120) est configurée pour libérer la compression de la couche d'isolation thermique élastique (111) lorsque le module de stockage d'énergie (300) atteint une température d'emballement thermique, de sorte que la couche d'isolation thermique élastique (111) est ramenée élastiquement à un état libre, et le panneau d'isolation thermique (100) à l'état libre est rempli entre le boîtier (200) et le module de stockage d'énergie (300).

2. Bloc-batterie selon la revendication 1, dans lequel une température de fusion à chaud de la couche d'emballage externe (120) est la température d'emballement thermique, la couche d'emballage externe (120) est configurée pour être dans un état d'endommagement par fusion à chaud pour former une partie creuse lorsque le module de stockage d'énergie (300) atteint la température de fusion à chaud, et la partie creuse est configurée pour libérer la compression sur la couche d'isolation thermique élastique (111).

3. Bloc-batterie selon la revendication 1 ou 2, dans lequel la couche d'emballage externe (120) est un film aluminium-plastique.

4. Bloc-batterie selon la revendication 1, dans lequel la couche d'isolation thermique élastique (111) est une couche d'isolation thermique en mousse.

5. Bloc-batterie selon l'une quelconque des revendications 1, 2 et 4, dans lequel une épaisseur libre de la couche d'isolation thermique élastique (111) à l'état libre est comprise dans une plage de 3 millimètres à 20 millimètres.

6. Bloc-batterie selon l'une quelconque des revendications 1, 2 et 4, dans lequel une épaisseur de compression de la couche d'isolation thermique élastique (111) est comprise dans une plage de 1 millimètre à 6 millimètres.

7. Bloc-batterie selon la revendication 1, dans lequel la couche ignifuge (112) est au moins l'une d'une couche de ruban de mica, d'une couche de fibre de verre céramique et d'une couche de caoutchouc de silicone.

8. Bloc-batterie selon l'une quelconque des revendications 1, 2, 4 et 7, dans lequel une épaisseur de la couche ignifuge (112) est comprise dans une plage de 0,1 millimètre à 0,3 millimètre.

9. Bloc-batterie selon l'une quelconque des revendications 1, 2, 4 et 7, dans lequel le boîtier (200) comprend une pluralité de panneaux latéraux, et le panneau d'isolation thermique (100) est connecté à un côté intérieur d'au moins une partie des panneaux latéraux.

10. Bloc-batterie selon l'une quelconque des revendications 1, 2, 4 et 7, dans lequel il y a au moins deux couches ignifuges (112), la couche d'isolation thermique élastique (111) et les deux couches ignifuges (112) sont empilées, et la couche d'isolation thermique élastique (111) est située entre les deux couches ignifuges (112).

11. Bloc-batterie selon l'une quelconque des revendications 1, 2, 4 et 7, dans lequel une couche de silicone est disposée entre la couche d'isolation thermique élastique (111) et la couche ignifuge (112), et la couche d'isolation thermique élastique (111) et la couche ignifuge (112) sont fixées à l'aide de la couche de silicone.

12. Bloc-batterie selon l'une quelconque des revendications 1, 2, 4 et 7, dans lequel le boîtier (200) comprend un panneau, le panneau comprend un premier panneau et un second panneau qui sont disposés à un intervalle, et le premier panneau est situé sur un côté du second panneau éloigné du module de stockage d'énergie (300), un premier trou de dissipation thermique est disposé sur le premier panneau, un deuxième trou de dissipation thermique est disposé sur le second panneau, et le premier trou de dissipation thermique et le deuxième trou de dissipation thermique communiquent de manière décalée ;
le panneau d'isolation thermique (100) est disposé dans un espace intercalaire entre le premier panneau et le second panneau, et un troisième trou de dissipation thermique est disposé sur le panneau d'isolation thermique ; (100)
le panneau d'isolation thermique (100) est fixé au premier panneau, le premier trou de dissipation thermique et le troisième trou de dissipation thermique communiquent de manière directe, et le deuxième trou de dissipation thermique et le troisième trou de dissipation thermique communiquent de manière décalée ; ou le panneau d'isolation thermique (100) est fixé au second panneau, le premier trou de dissipation thermique et le troisième trou de dissipation thermique communiquent de manière décalée, et le deuxième trou de dissipation thermique et le troisième trou de dissipation thermique communiquent de manière directe ; et
lorsque le panneau d'isolation thermique (100) est dans l'état comprimé, le premier trou de dissipation thermique, le deuxième trou de dissipation thermique et le troisième trou de dissipation thermique sont connectés ; et lorsque le panneau d'isolation thermique (100) est dans l'état libre, le panneau d'isolation thermique (100) est configuré pour empêcher le premier trou de dissipation thermique d'être connecté au deuxième trou de dissipation thermique.

13. Système de batterie, comprenant le bloc-batterie selon l'une quelconque des revendications 1 à 12, et comprenant également un support de montage, dans lequel le bloc-batterie est connecté au support de montage.
